# EUROPÄISCHE PATENTANMELDUNG

(11) **EP 1 837 628 A2**
(43) Veröffentlichungstag der Anmeldung: **26.09.2007**
(21) Anmeldenummer: 07104047.1
(22) Anmeldetag: 13.03.2007
(51) Int. Cl.: G01C 21/30

(54) **Verfahren zum Betrieb eines Navigationssystems**

(30) Priorität: 23.03.2006 DE 102006013389
(71) Anmelder: ROBERT BOSCH GMBH, 70442 Stuttgart (DE)
(72) Erfinder: Neukirchner, Ernst-Peter, 31139, Hildesheim (DE)

(57) **Zusammenfassung**

Die Erfindung betrifft ein Verfahren zum Betrieb eines Navigationssystems (1), insbesondere eines Navigationssystems für ein Kraftfahrzeug, mit einem Speicher (2), einer Anzeigeeinheit (3) und zumindest einem Bedienelement (4), wobei Kartenelemente umfassende Kartendaten von einem Kartendatenspeicher (5) in den Speicher (2) geladen werden und die Kartendaten weiterhin Attribute umfassen, welche Eigenschaften von Kartenelementen repräsentieren, wobei die Attribute und die Kartenelemente in getrennten Speicherbereichen des Kartendatenspeichers gespeichert sind und die Attribute einzeln oder in Gruppen den Kartenelementen zugeordnet werden.

## Beschreibung

### Technisches Gebiet

Die Erfindung betrifft ein Verfahren zum Betrieb eines Navigationssystems, insbesondere eines Navigationssystems für ein Kraftfahrzeug, sowie ein solches Navigationssystem und ein Speichermedium mit einer gespeicherten digitalen Karte.

### Stand der Technik

Navigationssysteme verwenden digitale Karten mit Kartendaten zur Darstellung eines Kartenausschnitts auf einem Display, zur Routendarstellung und -bestimmung, zur Zieleingabe, Zielfindung und zur Zielführung eines von einem Fahrer gelenkten Fahrzeugs, wie Kraftfahrzeug. Die digitalen Karten werden üblicher Weise auf CDs oder DVDs gespeichert und dort in einzelne gebietsweise Partitionen aufgeteilt, damit die in den Speicher beispielsweise eines Navigationssystems zu ladenden Daten hinsichtlich der Datenmenge begrenzt werden können, da die Datenmenge die Größe des benötigten Speichers und die Ladegeschwindigkeit oder Verarbeitungs-geschwindigkeit beeinflusst. Durch die Partitionierung der Kartendaten kann aus der Gesamtmenge der Kartendaten eine Auswahl von Daten einiger Partitionen ausgewählt werden, um für eine oder mehrere Anwendungen, wie der Ortung oder Routenberechnung, ein sinnvolles Gebiet auszuwählen.

Als Kartendaten werden digitale Kartendaten verwendet, wobei bei den Kartendaten beispielsweise Straßen als sogenannte Kanten dargestellt werden und Kreuzungspunkte oder Abzweigungen von Straßen als sogenannte Knoten dargestellt werden. Dabei wird der reale Straßenverlauf durch die Kanten und Knoten angenähert, wobei die Kanten beispielsweise durch eine Aneinanderreihung von geradlinigen Kantenabschnitten beschrieben wird. Die Darstellung von Straßennetzen wird so mittels gerichteter Graphen mit Kanten und Knoten realisiert. Weiterhin verwenden digitale Karten neben linienartigen Kanten und punktförmige Knoten auch Flächenelemente oder 3-dimensionale Elemente zur Abbildung der realen Gegebenheiten. Die Eigenschaften solcher Kartenelemente werden durch Attribute beschrieben, die zusammen mit den Kartenelementen gespeichert werden. Mit zunehmender Detaillierung des Inhalts der digitalen Karte und damit steigender Anzahl von Attributen nimmt somit der Datenumfang zur Beschreibung eines Elements oder der Gesamtheit der Elemente erheblich zu. Dabei benötigen nicht alle Anwendungen, die auch als Softwarefunktionen beschreibbar sind, zumeist nicht alle Attribute oder nur eine Untermenge der verfügbaren Attribute.

Darüber hinaus können Attribute wiederum von anderen Attributen abhängig sein. Beispielsweise kann ein Durchfahrverbot nicht nur von einem bestimmten Zeitraum am Tag abhängig sein, sondern kann auch für bestimmte Fahrzeugklassen oder Fahrzeugtypen gelten. Die Anzahl von Fahrspuren als Attribut einer Straße lässt sich beispielhaft mit den Richtungsmarkierungen, spurbezogenen Wegweiserinformationen oder der Art der Trennlinien zwischen den Spuren einer Straße kombinieren.

Ein weiteres Attribut kann ein räumlicher Gültigkeitsbereich für eine Gegebenheit sein. Ein Überholverbot oder eine Geschwindigkeitsbeschränkung ist beispielsweise nur auf einem Teil einer Straße zwischen zwei Kreuzungen gültig. Bekannte digitale Karten fügen an den Stellen, an welchen eine solche Beschränkung beginnt oder endet, einen zusätzlichen Knoten als Punktelement in die Karte ein und teilen somit eine Kante als Linienelement, welche den Straßenabschnitt repräsentiert, in zwei oder mehr Teilbereiche. Durch diese zusätzlichen Elemente, die auch abgespeichert werden müssen, wird viel Speicher unnötig verbraucht.

Die Vielzahl der Möglichkeiten von Kombinationen von Attributen von Kartenelementen führt zu einem schnell unüberschaubaren Kodierungs- und Speicheraufwand und einem großen Wertebereich für solche komplexen Attribute.

Darstellung der Erfindung, Aufgabe, Lösung, Vorteile

Aufgabe der Erfindung ist es, ein Verfahren zum Betrieb eines Navigationssystems zu schaffen, bei welchem der Kodierungs- und Speicheraufwand für digitale Karten vermindert wird. Weiterhin ist es eine Aufgabe der Erfindung, ein Navigationssystem zu schaffen, mittels welchem das erfindungsgemäße Verfahren durchführbar ist. Auch ist es Aufgabe der Erfindung, ein Speichermedium mit darauf gespeicherten digitalen Kartendaten zu schaffen, bei welchem der Kodierungs- und Speicheraufwand für digitale Karten vermindert wird und eine einfache Erweiterungsmöglichkeiten für zusätzliche Inhalte gegeben sind..

Erfindungsgemäß wird die Aufgabe bezüglich des Navigationssystems gelöst durch ein Verfahren zum Betrieb eines Navigationssystems, insbesondere eines Navigationssystems für ein Kraftfahrzeug, mit einem Speicher, einer Anzeigeeinheit und zumindest einem Bedienelement, wobei Kartenelemente umfassende Kartendaten von einem Kartendatenspeicher in den Speicher geladen werden, wobei die Kartendaten weiterhin Attribute umfassen, welche Eigenschaften von Kartenelementen repräsentieren, wobei die Attribute und die Kartenelemente in getrennten Speicherbereichen des Kartendatenspeichers gespeichert sind, wobei Kartenelemente mit Attributen kombiniert werden können und wobei Attribute untereinander gruppiert sein können. Dies bewirkt vorteilhaft eine insgesamt kompakte Speicherung der Attribute.

Dabei ist es besonders vorteilhaft, dass die Anzahl und die Art der Attribute einfach und unkompliziert erweiterbar ist und ohne großen Aufwand erfolgen kann. Dabei kann die jeweils schon bestehende Kodierung beibehalten werden, was zusätzlich vorteilhaft ist.

Erfindungsgemäß ist es vorteilhaft, wenn die Kartenelemente Kanten und/oder Knoten und/oder Flächenelemente und/oder 3-dimensionale Elemente umfassen.

Besonders vorteilhaft ist es, wenn komplexe Attribute von Kartenelementen aus einer Mehrzahl von einfachen Attributen verknüpft oder zusammengesetzt sind. Dies bewirkt insbesondere eine sehr Speicherplatz sparende Vorgehensweise und eine beliebige Kombinierbarkeit von beliebig vielen Attributen zu zusammengesetzten komplexen Attributen. Attributewerte, die zu komplexen Attributen gruppiert werden sollen, tragen jeweils gleiche Gruppennummern zur Identifikation. Dadurch ist keine Abhängigkeit in der Kodierung der Werte der Attribute zwischen zu kombinierenden Attributen unterschiedlichen Typs vorhanden und die Werte können dadurch leicht und ohne wesentliche Auswirkungen auf andere Attribute aktualisiert werden. Darüber hinaus sind die Attribute auch zweckmäßig in Gruppen gleichen Attributtyps gruppierbar, wobei für Attribute gleichen Attributtyps auch gleiche Datentypen verwendet werden können.

Weiterhin ist es besonders zweckmäßig, wenn die Kartenelemente mittels Identifikationen eindeutig identifiziert sind und die Attribute den Kartenelementen über die Identifikationen zugeordnet werden.

Insbesondere ist es durch die erfindungsgemäße Verfahrensweise zweckmäßig, dass ein Hinzufügen von neuen Attributen oder Attributtypen nicht zwingend eine Anpassung der Anwendungen verursacht, welche die digitale Karte verwendet, da nicht verwendete Attribute von solchen Anwendungen entsprechend lediglich nicht geladen werden müssen.

Die Aufgabe hinsichtlich des Navigationssystems wird gelöst durch ein Navigationssystem mit einem Speicher, einer Anzeigeeinheit und zumindest einem Bedienelement, wobei Kartenelemente umfassende Kartendaten von einem Kartendatenspeicher in den Speicher ladbar sind, wobei die Kartendaten weiterhin Attribute umfassen, welche Eigenschaften von Kartenelementen repräsentieren, wobei die Attribute nach Typen getrennt und die Kartenelemente in getrennten Speicherbereichen des Kartendatenspeichers speicherbar sind.

Die Aufgabe hinsichtlich des Speichermediums wird gelöst durch ein Speichermedium, wie Kartendatenspeicher, mit einer digitalen Karte, wobei Kartenelemente umfassende Kartendaten auf dem Kartendatenspeicher speicherbar sind, und die Kartendaten weiterhin Attribute umfassen, welche Eigenschaften von Kartenelementen repräsentieren, wobei die Attribute nach Typen getrennt und die Kartenelemente in getrennten Speicherbereichen des Kartendatenspeichers speicherbar sind. Dabei ist es besonders vorteilhaft, wenn mit den auf dem Speichermedium gespeicherten Kartendaten ein obiges Verfahren durchführbar ist.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine schematische Darstellung eines erfindungsgemäßen Navigationssystems;
- Fig. 2: eine Anordnung von gespeicherten Kartenelementen mit zugeordneten Attributen;
- Fig. 3: eine Gruppierung von Attributen;
- Fig. 4: einen Ausschnitt einer Kante mit Geschwindigkeitsbeschränkung; und
- Fig. 5: einen Ausschnitt einer Kante mit Geschwindigkeitsbeschränkung;

### Bevorzugte Ausführung der Erfindung

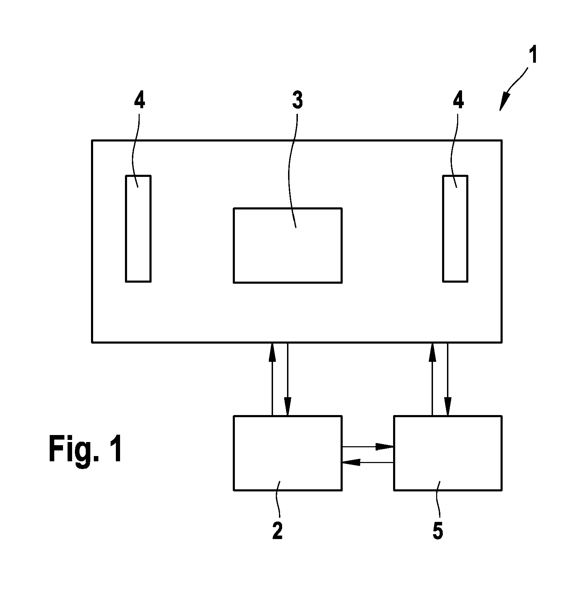

Die Figur 1 zeigt ein Navigationssystem 1 in schematischer Darstellung mit einem Speicher 2, einem Anzeigeelement 3, wie Monitor oder Display, und zumindest einem Bedienelement 4. Der Speicher 2 dient zur Speicherung von ausgewählten Kartendaten aus einem Kartendatenspeicher 5, wie Speichermedium, wobei Anwendungen auf den Speicher 2 und die dort gespeicherten Kartendaten zugreifen. Der Kartendatenspeicher 5 kann dabei vorteilhaft ein Festplattenspeicher, eine CD, eine DVD, ein Halbleiterspeicher oder ein anderweitiger Speicher sein, auf welchem zumindest ausgewählte Kartendaten einer digitalen Karte gespeichert sind.

Das Navigationssystem 1 erzeugt beispielsweise Kartendarstellungen auf dem Anzeigeelement 3, wobei berechnete Routen beispielsweise in einer Kartedarstellung auf dem Anzeigeelement anzeigbar sind.

Mittels des Bedienelements 4 kann durch den Bediener beispielsweise ein Fahrtziel eingegeben, eine Routenberechnung oder eine Zielführung gestartet werden oder eine andere Anwendung gestartet oder durchgeführt werden.

Als Kartendaten werden vorzugsweise digitale Karten mit digitalen Kartendaten verwendet, wobei bei den Kartendaten beispielsweise Straßen als sogenannte Kanten dargestellt werden und Kreuzungspunkte oder Abzweigungen von Straßen als sogenannte Knoten dargestellt werden. Dabei wird der reale Straßenverlauf durch die Kanten und Knoten angenähert, wobei die Kanten beispielsweise durch eine Aneinanderreihung von geradlinigen Kantenabschnitten beschrieben wird. Die Darstellung von Straßennetzen wird so mittels gerichteter Graphen mit Kanten und Knoten realisiert. Je nach Komplexität einer Kreuzung wird diese durch einen Knoten oder auch durch mehrere Knoten beschrieben. Auch können innerhalb einer Kreuzung Kanten vorliegen. Neben den linienhaften Kanten und den punktförmigen Knoten können auch Flächenelemente oder 3-dimensionale Elemente als Kartenelemente Verwendung finden.

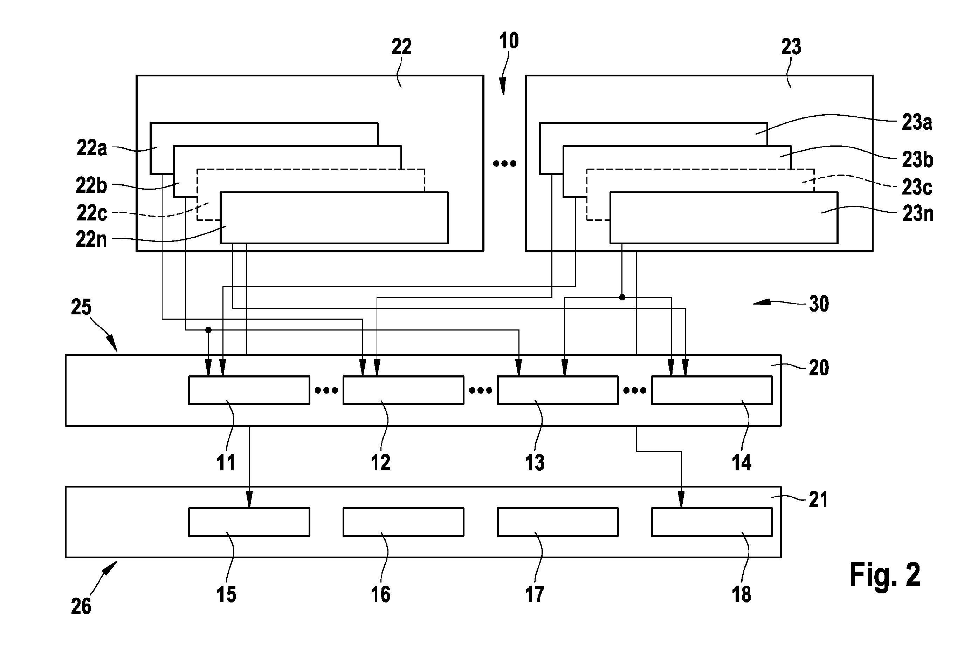

Digitale Karten sind mit ihren Knoten, Kanten, flächenelementen und/oder 3-dimensionalen Elementen umfassenden Kartendaten im Kartendatenspeicher gespeichert. Zumindest einigen der Kartenelemente der Kartendaten sind Attribute zugeordnet, die die Eigenschaften der Kartenelemente der Kartendaten beschreiben. Erfindungsgemäß werden für alle Attribute, auch solche, die miteinander kombinierbar sind, jeweils gesonderte Speicherbereiche zur Verfügung gestellt. In Figur 2 ist eine Anordnung 10 von Kartenelementen 11, 12, 13, 14, 15, 16, 17 und 18 zu erkennen, die in mehrere Speicherbereiche 20, 21 aufgeteilt sind, wobei lediglich zwei Speicherbereiche dargestellt sind. Darüber hinaus sind Speicherbereiche 22, 23 dargestellt, in welchen Attribute gespeichert sind. Jeder der Speicherbereiche 22, 23 enthält eine Kennung, welcher Typ von Attributen in ihm gespeichert sind. Mit der den Attributtyp repräsentierenden Kennung wird einer Anwendung der verwendete Attributtyp und gegebenenfalls auch der verwendete Dateityp und/oder der Wertebereich des Attributtyps kenntlich gemacht. Der Block 22 stellt einen Speicherbereich eines ersten Attributtyps Typ 1 dar, in welchem verschiedene erste Attribute 22a, 22b, 22c, ..., 22n jeweils mit zumindest einem Wert (Wert1, Wert 2, ... Wert n) des Attributs und einer Liste der Kartenelement-Identifizierungen zugeordnet sind. Der Block 23 stellt einen Speicherbereich eines zweiten Attributtyps Typ n dar, in welchem wiederum verschiedene zweite Attribute 23a, 23b, 23c, ..., 23n jeweils mit zumindest einem Wert (Wert1, Wert 2, ... Wert n) des Attributs und einer Liste der Kartenelement-Identifizierungen zugeordnet sind.

Eine Kartenelement-Identifizierung ist dabei eine Identifizierung eines Kartenelements, welche vorzugsweise eindeutig einem Kartenelement zuzuordnen ist und welche beispielsweise in einer numerischen Identifizierung besteht. Die Liste der Kartenelement-Identifizierungen zu jedem Attributwert gibt die Zuordnung zu den Karteelementen an, welchen dieser Attributwert zugewiesen ist. Dadurch ist es vorteilhaft möglich, jeden Attributwert nur einmal abzuspeichern.

Auch sind Datenbanken von digitalen Karten in räumliche Partitionen aufgeteilt, so dass Daten vorgegebener Teilgebiete der Karte zusammenhängend gespeichert und von Daten anderer Teilgebiete getrennt gespeichert sind, wodurch aus der digitalen Karte Kartenbereiche ausgewählt werden können, die für die jeweilige Anwendung notwendig und in den Speicher zu laden sind, um nicht die gesamte digitale Karte in den Speicher laden zu müssen. Erfindungsgemäß können Attribute oder auch Attributlisten für einzelne Partitionen, für Gruppen von Partitionen getrennt gespeichert sein oder für die gesamte Datenbank gespeichert sein.

Weiterhin können mehrere Attribute für ein Kartenelement zusammengefasst werden, wobei in diesem Fall neben der Kartenelement-Identifikation im Attributspeicher zu den jeweils vorliegenden Werten der Attribute jeweils eine Gruppenidentifikation zugeordnet und gespeichert wird. Die Gruppenidentifikation kann beispielsweise eine numerische Kennzeichnung sein. Auch ist die Gruppenidentifikation je Element eine eindeutige Identifikation für eine Kombination von Attributen. Auf diese Weise können beliebig viele Attribute miteinander kombiniert werden und es können beliebig viele Gruppen von Attributen einem Element zugewiesen werden.

Neben der getrennten Speicherung der Attribute in eigenen Speicherbereichen ist es auch vorteilhaft, wenn die digitale Karte mit ihren Kartenelementen als Daten einerseits in regionale Partitionen unterteilt sind und andererseits aber auch nach Inhalt gruppiert sind. Diese Bildung von Gruppierungen bezüglich des Inhalts kann beispielsweise eine Trennung von Straßennetzdaten, Flächennutzungsdaten, Points-of-Interest oder andere sein. Innerhalb der Straßennetzdaten kann eine weitere Unterteilung von Netzkanten für Straßenabschnitt und Netzknoten für Kreuzungen erfolgen. Solche Gruppierungen von Kartenelementen sind in der Figur 2 dargestellt, bei welcher die Kartenelemente in Gruppen 25 und 26 aufgeteilt sind, die jeweils einem Typ von Kartenelementen zugehören und die in jeweiligen Speicherbereichen gespeichert sind.

Dazu gehört auch die entsprechende Zuordnung von Attributen zu den Kartenelementen. Die Attribute sind in Gruppe aufgeteilt, wie oben beschrieben, und sind auch gruppenweise in einem entsprechenden Speicherbereich gespeichert. Dabei sind beispielhaft zwei von mehreren Speichern bzw. Speicherbereichen 22, 23 dargestellt. Die Attribute sind den Kartenelementen zugeordnet, wobei auf diese Weise null, ein, zwei oder mehrere Attribute mit ihren Werten den einzelnen Kartenelementen zugeordnet sein können. Dabei können Attribute auch verschiedenen Kartenelementen unterschiedlichen Typs zugeordnet werden. Dies ist in der Figur 2 dadurch zu erkennen, dass die Attribute mit ihren Werten über Linien 30 mit den Kartenelementen verknüpft sind. Beispielsweise ist das Attribut 22a mit dem Kartenelement 12 verknüpft, das Attribut 22b mit den Kartenelementen 11 und 13, das Attribut 22n mit dem Kartenelement 14, das Attribut 23a mit dem Kartenelement 12, das Attribut 23b mit dem Kartenelement 11 und das Attribut 23n mit den Kartenelementen 13 und 14. Weiterhin ist das Attribut 22n mit dem Kartenelement 15 verknüpft und das Attribut 23a mit dem Kartenelement 18. Es ist zu erkennen, daß manche Attribute mit mehreren Kartenelementen verknüpft sind.

Die Attribute können unterschiedlicher Art sein, das heißt, es können beispielsweise Namen sein, wie Ländernamen, Ortsnamen, Straßennamen etc. Auch können die Attribute Zahlen sein, wie Hausnummern oder -bereiche. Weiterhin können die Attribute Streckenverbote sein, wie Geschwindigkeitsbeschränkungen oder Überholverbote, Durchfahrverbote. Auch können sie Informationen sein, wie Spurinformationen, Wegweiserinformationen und/oder auch andere Inhalte haben.

Bei den Streckenverboten können generelle Verbote und abhängige Verbote unterschieden werden, die von beispielsweise dem Fahrzeugtyp, dem Gewicht, der Breite, der Höhe oder der Länge abhängig gemacht sein können. Bei den Spurinformationen können die Spuranzahl, Markierungen oder Trennungen als Attribute auftreten.

Abhängig vom Attributtyp kann die Verwendung von anderen Datentypen vorteilhaft sein. Dabei sind Namen typischerweise in Strings angegeben, Geschwindigkeitsbegrenzungen können durch numerische Werte angegeben sein, wie Integer und Fahrzeugtypen lassen sich mit dem Aufzählungstyp, der Enumeration, vorteilhaft beschreiben. Darüber hinaus kann je Attribut ein Wertebereich oder eine Anzahl gültiger Werte zugeordnet sein. Die verwendeten Anwendungen können aus dem Attributtyp entweder implizit oder über eine ebenfalls in der digitalen Karte gespeicherte Datenbeschreibung (Metadaten) explizit auf den Datentyp und den Wertebereich schließen.

Auch können Attribute einem Kartenelement zugewiesen werden und nicht eine Gruppierung angewendet werden, so dass die Attribute dann für das gesamte Kartenelement gültig ist.

Darüber hinaus können sich komplexe Attribute aus einzelnen Attributen zusammensetzen lassen und speichern lassen. Als Beispiel für ein solches komplexes Attribut ist eine zeitliche Durchfahrbeschränkung. Dabei kann eine Durchfahrbeschränkung beispielsweise für Motorräder von 22h bis 6h gültig sein. Dabei kann das komplexe Attribut bestehen aus den Attributen "Durchfahrverbot", dem Attribut "nur für Motorräder" und aus dem Attribut "22h bis 6h".

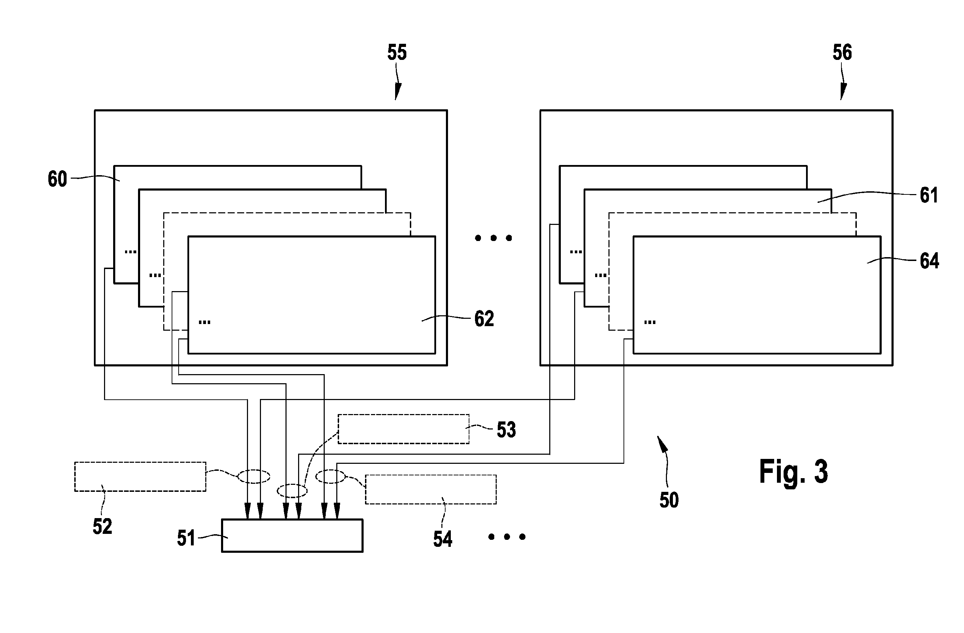

Die Figur 3 zeigt eine Gruppierung 50 von Attributen. Dabei sind einem Kartenelement 51 drei Gruppen von Attributen 52, 53 und 54 zugeordnet. Die erste Gruppe 52 von Attributen besteht aus dem Wert 1 (60) des ersten Attributtyps 55 und dem Wert 2 (61) des zweiten Attributtyps 56. Die zweite Gruppe 53 von Attributen besteht aus dem Wert k (62) des ersten Attributtyps 55 und dem Wert 1 (63) des zweiten Attributtyps 56. Die dritte Gruppe 54 von Attributen besteht aus dem Wert k (62) des ersten Attributtyps 55 und dem Wert n (64) des zweiten Attributtyps 56.

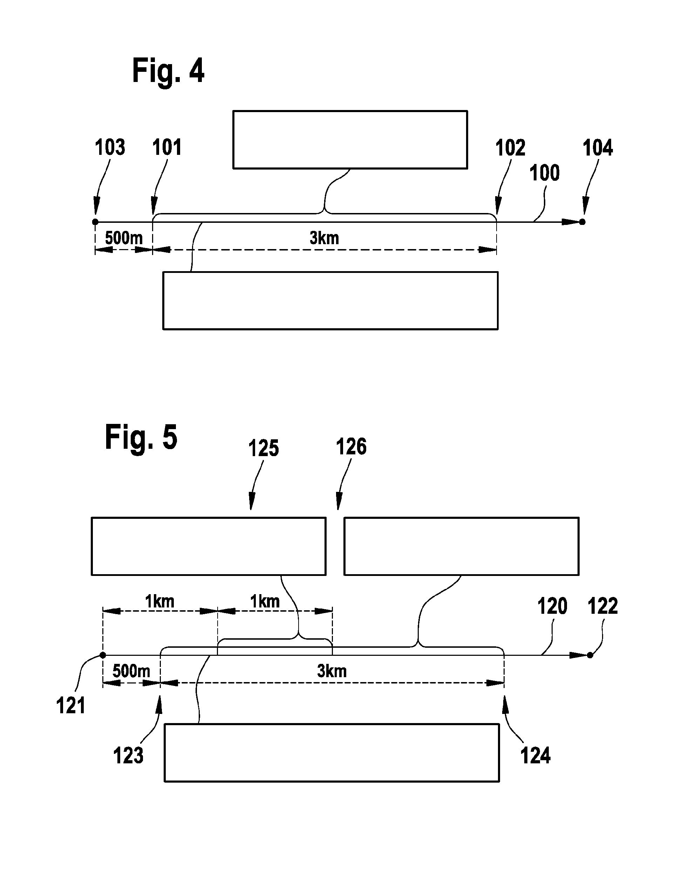

Eine solche Gruppierung kann auch angewendet, wenn ein Attribut nur auf einen Teil eines Straßenabschnitts angewendet wird, wie beispielsweise bei einer Geschwindigkeitsbeschränkung. Die Figur 4 zeigt ein solches Beispiel, bei welchem eine Kante 100 dargestellt ist, auf welcher im Bereich zwischen zwei Positionen 101, 102 eine Geschwindigkeitsbeschränkung gültig ist, wobei die zwei Positionen 101, 102 nicht gleich auch Knoten 103, 104 sind. Die Geschwindigkeitsbeschränkung ist gültig ab dem Abstand von 500 m von Knoten 103 auf einer Länge von 3 km. In diesem Fall wird das Attribut der Geschwindigkeitsbeschränkung vom 60km/h aus einer Attributliste mit einem räumlichen Gültigkeitsbereich von 500 m bis 3,5 km aus einer zweiten Attributliste kombiniert. Hinter den beiden Attributeinträgen ist weiterhin die Identifikationsnummer des Straßenabschnitts zu finden und eine identische Gruppennummer, wie beispielsweise 1.

Die Figur 5 zeigt ein Ausführungsbeispiel, bei welchem mittels einer Gruppierung mit einem Gültigkeitsbereich auch richtungsabhängige Attribute zugeordnet werden können. Eine Geschwindigkeitsbeschränkung von 60 km/h gilt für beide Fahrtrichtungen, jedoch in unterschiedlichen Bereichen. Dazu ist eine Kante 120 zwischen zwei Knoten 121 und 122 dargestellt. In einem ersten Bereich ist zwischen zwei Positionen 123, 124 eine Geschwindigkeitsbeschränkung in der einen Fahrtrichtung gültig, und in einem zweiten Bereich ist zwischen den beiden Positionen 125 und 126 eine Geschwindigkeitsbeschränkung in der anderen Fahrtrichtung gültig. Die erste Geschwindigkeitsbeschränkung ist gültig ab dem Abstand von 500 m von Knoten 121 auf einer Länge von 3 km. In diesem Fall wird das Attribut der Geschwindigkeitsbeschränkung vom 60km/h aus einer Attributliste mit einem räumlichen Gültigkeitsbereich von 500 m bis 3,5 km aus einer zweiten Attributliste kombiniert. Die zweite Geschwindigkeitsbeschränkung ist gültig ab dem Abstand von 2000 m von Knoten 121 auf einer Länge von 1000 m. In diesem Fall wird das Attribut der Geschwindigkeitsbeschränkung vom 60km/h aus einer Attributliste mit einem räumlichen Gültigkeitsbereich von 2000 m bis 1000 m aus einer zweiten Attributliste kombiniert. Der Wert von 60 km/h wird dem Straßenabschnitt über seine Identifikationsnummer zugeordnet, in diesem Fall aber mit zwei Gruppennummern, wie 1 und 2. Ein Gültigkeitsbereich von 500 m bis 3500 m wird in diesem Beispiel einer Gruppe 1 zugeordnet, was der Fahrtrichtung in Pfeilrichtung entspricht und ein zweiter Gültigkeitsbereich von 2000 m bis 1000 m wird in diesem Beispiel einer Gruppe 2 zugeordnet, was der Fahrtrichtung entgegen der Pfeilrichtung entspricht.

Das erfindungsgemäße Verfahren weist auch den Vorteil auf, dass bei einer Erweiterung einer Datenbank mit zusätzlichen Attributen, die Erweiterung dadurch erfolgt, dass ein zusätzlicher Speicherbereich geschaffen wird, die benötigten Werte eingetragen werden und zu diesen die Identifikationsnummern der Kartenelemente aufgelistet werden, welchen die neuen Attribute zugeordnet werden.

Auch besteht der Vorteil, dass bei einer erfindungsgemäßen Vorgehensweise der Speicherung der Attribute, die Kompatibilität mit verschiedenen alten Versionen von Anwendungen, wie Anwendungsprogramme, gewährleistet ist. Eine ältere Version einer Anwendung, der ein neues Attribut noch nicht bekannt ist, kann die zusätzlich hinzugekommenen Attributspeicher ignorieren, weil sie deren Attributtyp nicht auswerten oder anwenden kann. Dadurch kann es zwar die mit den neuen Attributen zugeordnete Funktionen nicht anbieten, behält aber ihre Funktionalität bezüglich der verbleibenden ursprünglich verwendeten Attribute und den diesbezüglichen Funktionen. Dies bedeutet aber auch, dass bei Erweiterung der Datenbanken die Anwendungen, wie Anwendungssoftware, nicht auch neu überarbeitet werden müssen.

## Patentansprüche

1. Verfahren zum Betrieb eines Navigationssystems (1), insbesondere eines Navigationssystems für ein Kraftfahrzeug, mit einem Speicher (2), einer Anzeigeeinheit (3) und zumindest einem Bedienelement (4), wobei Kartenelemente umfassende Kartendaten von einem Kartendatenspeicher (5) in den Speicher (2) geladen werden, **dadurch gekennzeichnet, dass** die Kartendaten weiterhin Attribute umfassen, welche Eigenschaften von Kartenelementen repräsentieren, wobei die Attribute und die Kartenelemente in getrennten Speicherbereichen des Kartendatenspeichers gespeichert sind und die Attribute einzeln oder in Gruppen den Kartenelementen zugeordnet werden.

2. Verfahren nach Anspruch 1, **dadurch gekennzeichnet, dass** die Kartenelemente Kanten und/oder Knoten und/oder Flächenelemente und/oder 3-dimensionale Elemente umfassen.

3. Verfahren nach Anspruch 1 oder 2, **dadurch gekennzeichnet, dass** zumindest einzelne Attribute von Kartenelementen aus einer Mehrzahl von Attributen verknüpft oder zusammengesetzt sind.

4. Verfahren nach einem der vorhergehenden Ansprüche, **dadurch gekennzeichnet, dass** Attribute verschiedenen Typs in Gruppen zu komplexen Attributen gruppierbar sind.

5. Verfahren nach einem der vorhergehenden Ansprüche, **dadurch gekennzeichnet, dass** für Attribute gleichen Attributtyps gleiche Datentypen verwendet werden.

6. Verfahren nach einem der vorhergehenden Ansprüche, **dadurch gekennzeichnet, dass** die Kartenelemente mittels Identifikationen eindeutig identifiziert sind und den Kartenelemente die Attributen über die Identifikationen zugeordnet sind.

7. Navigationssystem mit einem Speicher (2), einer Anzeigeeinheit (3) und zumindest einem Bedienelement (4), wobei Kartenelemente umfassende Kartendaten von einem Kartendatenspeicher (5) in den Speicher (2) ladbar sind, **dadurch gekennzeichnet, dass** die Kartendaten weiterhin Attribute umfassen, welche Eigenschaften von Kartenelementen repräsentieren, wobei die Attribute und die Kartenelemente in getrennten Speicherbereichen des Kartendatenspeichers gespeichert sind.

8. Speichermedium, wie Kartendatenspeicher, mit einer digitalen Karte, wobei Kartenelemente umfassende Kartendaten auf dem Kartendatenspeicher (5) speicherbar sind, **dadurch gekennzeichnet, dass** die Kartendaten weiterhin Attribute umfassen, welche Eigenschaften von Kartenelementen repräsentieren, wobei die Attribute und die Kartenelemente in getrennten Speicherbereichen des Kartendatenspeichers gespeichert sind.

9. Speichermedium nach Anspruch 8, **dadurch gekennzeichnet, dass** mit den auf dem Speichermedium gespeicherten Kartendaten ein Verfahren nach zumindest einem der vorhergehenden Ansprüche 1 bis 6 durchführbar ist.
